# EUROPÄISCHE PATENTSCHRIFT

(11) **EP 3 070 380 B1**
(45) Veröffentlichungstag und Bekanntmachung des Hinweises auf die Patenterteilung: **26.06.2019**
(21) Anmeldenummer: 15405023.1
(22) Anmeldetag: 19.03.2015
(51) Int. Cl.: F16K 1/04, F16K 31/04, F16K 1/48, F16K 31/50

(54) **VENTILANTRIEB**
VALVE DRIVE
ACTIONNEUR DE VANNE

(43) Veröffentlichungstag der Anmeldung: 21.09.2016
(73) Patentinhaber: R. Nussbaum AG, 4600 Olten (CH)
(72) Erfinder: Schneider, Livio, 4853 Riken (CH); Widmer, Severin, 6260 Reiden (CH); Bobst, Urs, 4703 Kestenholz (CH); Zeiter, Patrik, 4853 Riken (CH)
(74) Vertreter: Keller & Partner Patentanwälte AG

(56) Entgegenhaltungen:
- EP-A1- 2 141 396
- US-A1- 2001 035 510
- US-B1- 7 066 192
- US-B2- 8 256 742

## Beschreibung

### Technisches Gebiet

Die Erfindung betrifft einen Antrieb für eine steigende Spindel eines Spindelventils, umfassend einen Motor und eine über den Motor antreibbare Antriebswelle sowie eine Drehmomentübertragungseinrichtung zum Übertragen eines Drehmoments von der Antriebswelle auf eine Spindel des Spindelventils.

### Stand der Technik

Motorisch angetriebene Ventile gewinnen immer mehr an Wichtigkeit, da damit Fluidströme nicht nur an- respektive abgestellt werden, sondern auch dosiert werden können und da damit ein Fluidstrom ferngesteuert, programmgesteuert oder auch sensorgesteuert sein kann. Eine ferngesteuerter Fluidstrom kann von Vorteil sein, wenn zum Beispiel mehrere Wasserhähne gleichzeitig an- respektive abgestellt werden sollen, zum Beispiel wenn bei einem grösseren Areal wie einem Schulgelände während der Ferien die Brunnen abgestellt werden sollen. Programmgesteuert können zum Beispiel Springbrunnen sein. Diese können so programmiert sein, dass sie jeweils tagsüber in Betrieb sind. Schliesslich können sensorgesteuerte Ventile bei Feuerlöschanlagen oder bei Leckagen hilfreich sein. Im ersten Fall kann das Ventil an einen Rauchsensor oder Wärmesensor gekoppelt sein, im letzten Fall zum Beispiel an einen Wassersensor.

Eine besondere Herausforderung liegt bei der Konstruktion die Motorisierung der Spindelventile mit steigender Spindel, da bei diesen die Bewegung der Spindel in Spindellängsrichtung aufgenommen werden muss. Diverse Ansätze zu solchen Antrieben sind bereits bekannt.

Aus der US 7,066,192 B1 ist zum Beispiel eine Vorrichtung zum Schliessen eines Ventils, insbesondere für das Schliessen des Wasserhauptventils nach einer Leck-Detektion bekannt. Die Vorrichtung umfasst mehrere Adapter um das Betätigungselement von vielen verschiedenen Ventilen mit der Motoreinheit verbinden zu können. Zur Befestigung der Motoreinheit kann am bestehenden Betätigungselement eine Mutter entfernt werden, um an das Gewinde den Adapter anzuschliessen. Die Motoreinheit umfasst eine Gabel, welche in die Rohrleitung eingreift, so dass die Motoreinheit bei der Betätigung nicht mit dreht.

Weiter zeigt die US 8,256,742 B2 einen Ventilantrieb, womit manuell betätigbare Ventile automatisiert werden können. Die Antriebseinheit kann entweder das Ventil an- und ausschalten, oder aber auch einen Fluidfluss justieren und kann zum Beispiel mit einem Sensor ausgestattet sein, welcher die Präsenz von Wasser detektieren kann. Als Ventil können ein Kugelventil, ein Schieberventil oder weitere Ventile vorgesehen sein, welche insbesondere mit mehreren Umdrehungen geöffnet respektive geschlossen werden. Die Motoreinheit umfasst eine Antriebswelle, welche im unteren Ende in eine Eingriffgabel mündet, so dass die Gabel in Löcher des Handrads geführt werden kann.

Die US 2001/0035510 A1 zeigt weiter ein elektrisch angetriebenes Kugelventil, bei welchem zwischen einem automatischen und einem manuellen Betrieb umgeschaltet werden kann.

Die bekannten Antriebe haben den Nachteil, dass sie einerseits konstruktiv aufwendig sind. Um die Antriebe gegen Rotation am Ventil fixieren zu können, sind bei diesen bekannten Antrieben jeweils eine Gabel vorgesehen, welche in die Rohrleitung eingreift. Aufgrund dieser Fixierung kann keine hinreichend präzise Steuerung des Ventils erreicht werden. Weiter ist eine Montage der bekannten Antriebe an ein bestehendes Ventil entweder umständlich oder es wird keine hinreichend präzise Steuerung des Ventils erreicht. Zudem sind diese Antriebe nicht für beliebige Ventile einsetzbar.

### Darstellung der Erfindung

Aufgabe der Erfindung ist es, einen dem eingangs genannten technischen Gebiet zugehörenden Antrieb für eine steigende Spindel eines Spindelventils zu schaffen, welcher besonders einfach aufgebaut ist und zudem äusserst einfach an bestehenden steigenden Spindelventilen montiert werden kann, wobei eine hinreichend präzise Steuerung des Ventils gewährleistet ist.

Die Lösung der Aufgabe ist durch die Merkmale des Anspruchs 1 definiert. Gemäss der Erfindung weist die Drehmomentübertragungseinrichtung einen mit der Antriebswelle zusammenwirkenden Adapter auf, wobei mit dem Adapter eine Relativbewegung zwischen der Antriebswelle und der Spindel des Spindelventils in Richtung einer Antriebswellenachse aufnehmbar ist und wobei mit dem Adapter ein Drehmoment von der Antriebswelle an die Spindel des Spindelventils übertragbar ist.

Durch den Adapter kann der Antrieb einfach an ein bestehendes Spindelventil gekoppelt werden. Da der Adapter zudem derart ausgebildet ist, dass eine Relativbewegung zwischen der Spindel des Ventils und der Antriebswelle des Antriebs aufgenommen werden kann, ergibt sich gesamthaft ein äusserst einfach zu installierender Antrieb, da dieser relativ zum Spindelventil fix angeordnet werden kann.

Aufgrund der einfachen Konstruktion des Adapters kann der Antrieb besonders einfach auf ein bestehendes Spindelventil montiert werden, so dass die meisten handelsüblichen

Spindelventile nachgerüstet werden können. Generell kann aber natürlich das Spindelventil einen solchen Antrieb auch bereits umfassen, so dass auch direkt ein Spindelventil mit Antrieb verbaut werden kann.

Erfindungsgemäss ist der Adapter in einer ersten Variante längsverschieblich in Richtung der Antriebswellenachse an der Antriebswelle geführt. Damit kann die Bewegung der Spindel beim Öffnen oder Schliessen des Spindelventils aufgenommen werden. In einer besonders bevorzugten Variante ist der Adapter drehfest und in Längsrichtung fix mit der Spindel verbindbar. Vorzugsweise ist der Adapter lösbar mit der Spindel verbindbar. Ebenso ist es von Vorteil, wenn der Adapter lösbar mit der Antriebswelle verbindbar ist. Dadurch, dass der Adapter zumindest von der Antriebswelle oder von der Spindel wieder lösbar ist, wird erreicht, dass der Antrieb einfach ausgetauscht werden kann. Dies ist von besonderem Vorteil, wenn der Antrieb zum Beispiel in einem sicherheitsrelevanten Bereich, wie zum Beispiel bei einer Sprinkleranlage eingesetzt ist und daher regelmässig gewartet werden muss.

Der Adapter kann auch eine nicht koaxiale Drehmomentübertragung zwischen der Antriebswelle und der Spindel ermöglichen, indem zum Beispiel ein erstes Zahnrad mit der Spindel und ein zweites Zahnrad mit der Antriebswelle fest verbunden sind und wobei diese Zahnräder miteinander in Eingriff stehen. Um die axiale Bewegung der Spindel aufnehmen zu können, weist mindestens ein Zahnrad eine entsprechend grosse axiale Länge auf.

Vorzugsweise sind aber die Spindel und die Antriebswelle bei montiertem Antrieb koaxial orientiert.

In Varianten kann der Adapter erfindungsgemäss statt an der Antriebswellenachse auch längsverschieblich an der Spindel geführt sein. Der Adapter kann erfindungsgemäss aber auch sowohl an der Spindel als auch an der Antriebswellenachse längsverschieblich geführt sein.

Vorzugsweise ist der Adapter zur Aufnahme der Antriebswelle hülsenförmig ausgebildet. Die Hülsenform stellt eine besonders kostengünstig herzustellende Variante des Adapters dar. Zudem kann mit der Hülsenform ein besonders stabiler Adapter erreicht werden. Die Hülse kann dabei zylindrisch mit einer axialen durchgehenden Öffnung ausgebildet sein.

In Varianten kann der Adapter auch bolzenförmig mit beidseitig angebrachten Befestigungsmittel zum Befestigen an der Spindel respektive an der Antriebswelle, ausgebildet sein.

Vorzugsweise ist der Adapter mittels Formschluss drehfest an die Antriebswelle ankoppelbar. Damit wird erreicht, dass ein Drehmoment von der Antriebswelle an die Spindel übertragbar ist. Eine drehfeste Ankoppelung ist von besonderem Vorteil, da solche einfach zu bewerkstelligen sind und da damit ein Drehmoment besonders effizient und weitgehend verlustfrei von der Antriebswelle an den Adapter übertragen werden kann. Eine drehfeste Ankoppelung kann auf unterschiedliche Art und Weise erreicht werden. Die Antriebswelle und der Adapter werden vorzugsweise koaxial angeordnet. Die Antriebswelle und der Adapter können zum Beispiel über eine Linearführung verbunden sein, wobei die Antriebswelle eine hinterschnittene Nut und der Adapter eine entsprechende Feder umfasst. Es können, um Verkanntungen zu vermeiden, auch mehrere solcher Linearführungen symmetrisch um die Rotationsachse eingesetzt werden.

In Varianten kann der Adapter auch über ein Getriebe an die Antriebswelle koppelbar sein. Dazu können zum Beispiel der Adapter und die Antriebswelle jeweils ein Zahnrad aufweisen, wobei mindestens ein Zahnrad eine Länge aufweist, welche den Spindelweg übersteigt.

Bevorzugt weist die Antriebswelle einen polygonalen Querschnitt, vorzugsweise einen quadratischen Querschnitt auf und der Adapter weist bevorzugt eine Antriebswellenöffnung mit entsprechendem Querschnitt auf, so dass die Antriebswelle in die Antriebswellenöffnung einführbar und darin längsverschieblich geführt und verdrehgesichert gehalten ist. Damit wird eine besonders einfache Drehmomentübertragung zwischen der Antriebswelle und dem Adapter erreicht. Weiter ergibt sich damit eine besonders einfache Montage des Antriebs, da lediglich die Antriebswelle in die Antriebswellenöffnung des Adapters eingeführt werden muss und da dies aufgrund der Symmetrie in vier Orientierungen des Adapters zur Antriebswelle möglich ist.

Die Antriebswelle weist vorzugsweise einen polygonalen Querschnitt, zum Beispiel einen Querschnitt der Form eines regelmässigen Vielecks, zum Beispiel eine Sechseckform, auf. Weiter kann die Antriebswelle auch eine Sternform, eine Rechtecksform oder dergleichen aufweisen, wobei die Antriebswellenöffnung eine entsprechende Form, das heisst eine im geometrischen Sinne ähnliche Form, aufweist. Dem Fachmann ist klar, dass der Querschnitt der Antriebswellenöffnung geringfügig grösser zu wählen ist als der Querschnitt der Antriebswelle, so dass die Antriebswelle mit möglichst geringem Reibwiderstand in der Antriebswellenöffnung axial verfahren werden kann.

Besonders bevorzugt weist die Antriebswelle eine quadratische Querschnittsform auf, wobei die Antriebswellenöffnung ebenfalls eine quadratische Querschnittsform aufweist. Damit wird eine optimale Drehmomentübertragung bei zugleich konstruktiv einfacher Ausbildung der Antriebswelle und der Antriebswellenöffnung erreicht.

Alternativ kann die Antriebswelle auch eine ovale oder eine weitgehend freie Form aufweisen, welche verdrehgesichert in einer entsprechenden Antriebswellenöffnung aufgenommen werden kann. Dem Fachmann ist klar, dass die Antriebswellenöffnung nicht zwingend einen zum Querschnitt der Antriebswelle entsprechenden Querschnitt aufweisen muss.

Bevorzugt weist der Adapter eine zur Antriebswellenöffnung koaxiale Spindelöffnung auf, in welche die Spindel einführbar ist. Damit kann der Adapter besonders einfach aufgebaut sein, insbesondere falls die Spindelöffnung und die Antriebswellenöffnung dieselbe Querschnittsform aufweisen kann der Adapter im Wesentlichen als hülsenförmig ausgebildet sein.

Alternativ kann die Spindel auch anderweitig mit dem Adapter verbunden werden. Zum Beispiel kann der Adapter auch stoffschlüssig, mittels Schweissvorgang, Lötvorgang oder sonstigen Fügvorgängen mit der Spindel verbunden werden. Weiter kann der Adapter auch über eine rechtwinklig zur Rotationsachse der Spindel orientierte Schraubverbindung oder Bolzenverbindung mit der Spindel verbunden sein. Dem Fachmann sind auch weitere geeignete Verbindungstechniken bekannt.

Bevorzugt weist die Spindelöffnung des Adapters eine Ausbuchtung, insbesondere eine umlaufende Ausbuchtung auf, welche in einer Ringnut, zum Beispiel einer Sprengringnut einer Spindel derart aufnehmbar ist, dass der Adapter an einer Spindel durch Verrastung axial fixierbar ist. Damit wird eine besonders einfache Kopplung des Adapters an die Spindel erreicht.

In Varianten kann der Adapter auch über einen Splint oder eine Schraube an der Spindel fixiert werden - dazu kann die Spindel mit einer rechtwinklig zur Rotationsachse orientierten Bohrung versehen sein. Weiter kann auch eine Fixierschraube vorgesehen sein, welche lediglich auf eine Flanke der Vierkantspindel wirkt und somit einen Kraftschluss bildet. Weiter kann ein Sprengring eingesetzt werden, welcher durch vorbereitete Öffnungen des Adapters hindurch in die Sprengringnut der Spindel eingreift. Weiter kann die Verrastung auch mit einem dem Fachmann bekannten Schnappverschluss erreicht werden, wobei die Spindel ein radial abstehendes federndes Element aufweist, welches bei Einführung in den Adapter in eine Kerbe oder Öffnung des Adapters einschnappt. Dem Fachmann sind beliebig andere Techniken bekannt, um den Adapter fix mit der Spindel zu verbinden.

Vorzugsweise umfasst der Antrieb ein Gehäuse, welches Befestigungsmittel zur Fixierung an einem Spindelventiloberteil umfasst. Dadurch, dass der Antrieb über das Gehäuse am Spindelventiloberteil fixiert ist, kann einem durch eine Betätigung des Antriebs (und damit der Betätigung des Spindelventils) verursachtem Drehmoment entgegen gehalten werden. Damit wird verhindert, dass bei der Betätigung des Spindelventils der Antrieb als Ganzes relativ zum Ventilgehäuse in Bewegung versetzt wird. Es ist von besonderem Vorteil, wenn die Fixierung am Spindelventiloberteil erfolgt, da damit eine kompakte Bauweise des Antriebs erreicht werden kann. Weiter kann damit die Ausrichtung des Antriebs relativ zum Spindelventil (z.B. Antrieb in Flucht zur Rohrleitung oder rechtwinklig zur Rohrleitung) beliebig angeordnet werden.

Um einen besonders stabilen Antrieb zu erhalten kann es von Vorteil sein, wenn die Befestigungsmittel über ein Gehäuse des Getriebes am Ventil befestigt werden. Damit wird erreicht, dass das Aussengehäuse entlastet und insbesondere kostengünstiger hergestellt werden kann.

In Varianten kann der Antrieb auch zum Beispiel über eine Rohrschelle an einer Zu- oder Ableitung des Spindelventils befestigt sein.

Vorzugsweise ist der Antrieb über die Befestigungsmittel kraftschlüssig mit dem Ventiloberteil respektive Ventiloberteilkörper verbindbar. Damit ergibt sich wiederum eine besonders einfache Fixierung des Antriebs am Ventiloberteil.

Alternativ kann der Antrieb auch form- und/oder stoffschlüssig mit dem Ventiloberteil verbunden sein.

Bevorzugt umfassen die Befestigungsmittel einen Hohlkörper zur Befestigung am Spindelventil, wobei in dem Hohlkörper der Adapter anordbar ist und wobei ein axial geschlitzter distaler Bereich des Hohlkörpers Druckmittel umfasst, um den axial geschlitzten Bereich mit einer durch die Druckmittel erzeugten radialen Kraft derart zu verpressen, dass der Hohlkörper, über den distalen Bereich am Spindelventil befestigbar ist. Der Hohlkörper ist vorzugsweise im Wesentlichen zylindrisch ausgebildet. Ein erstes Ende des Hohlkörpers ist vorzugsweise derart dimensioniert, das er über die Lagerhülse der Spindel respektive dem Oberteilkörper gestülpt werden kann. Im Bereich des ersten Endes weist der Hohlkörper vorzugsweise mindestens einen, besonders bevorzugt vier oder sechs axiale Schlitze auf, welche sich bis zum ersten Ende hin erstreckt. Besonders bevorzugt ist der Hohlkörper als Hülse ausgebildet.

Vorzugsweise umfasst die Hülse in einem Bereich eines zweiten, dem ersten gegenüberliegenden Endes einen radialen Flansch, über welchen die Hülse mit einem Gehäuseteil verbunden, insbesondere zum Beispiel verschraubt werden kann.

In Varianten kann statt der Hülse auch ein U-Förmiges Element vorgesehen sein, welches mit der einen der beiden gegenüberliegenden Flanken mit dem Gehäuseteil des Antriebs und dem anderen Teil mit dem Ventiloberteil verbunden ist. Dem Fachmann sind aber auch andere Befestigungsmöglichkeiten bekannt.

Vorzugsweise umfassen Druckmittel eine den Schlitz überbrückende Schraubverbindung. Diese Schraubverbindung kann zum Beispiel als Bride oder Rohrschelle ausgebildet sein, welche um das erste Ende der Hülse herum angeordnet ist und so in angezogenem Zustand den Schlitz zusammenpressen kann. Durch das Zusammenpressen verringert sich auch der Innendurchmesser des ersten Endes der Hülse, womit die Hülse kraftschlüssig am Ventilöberteil befestigt werden kann. Diese Verbindung ist besonders von Vorteil, da sie einerseits schnell und ohne Fachwissen betätigt werden kann und zudem auch lösbar ist.

In Varianten kann statt der Schraubverbindung auch ein mittels Hebel bedienbares Spannelement vorgesehen sein, welches ähnlich einem Schnellspanner zur Befestigung eines Sattels an einem Sattelrohr (Sattelklemme) ausgebildet sein kann.

Bevorzugt umfasst der Hohlkörper seitlich eine Öffnung, durch welche hindurch eine Axialposition des Adapters erfassbar ist. Damit kann in besonders einfacher Weise eine Ventilstellung abgelesen werden. Besonders bevorzugt umfasst die Spindel respektive der Adapter einen Mantel, vorzugsweise in einer Signalfarbe, welcher in Offenstellung die seitliche Öffnung teilweise deckt und in Schliessstellung die Öffnung nicht deckt.

In einer bevorzugten Ausführungsform umfasst die Vorrichtung eine Stellanzeige, bei welcher der Mantel als eine Signalhülse ausgebildet ist, die auf den Adapter geschoben werden kann. Die Signalhülse ist derart dimensioniert und wird derart am Adapter positioniert, dass sie in einem geschlossenen Zustand des Ventils nicht sichtbar ist und in nicht geschlossenem Zustand, das heisst in einem teilweise oder ganz geöffneten Zustand zumindest teilweise durch die seitlichen Öffnungen hindurch sichtbar ist.

In Varianten kann auf die seitliche Öffnung auch verzichtet werden. Eine Stellungsanzeige kann auch digital ermittelt und ausgegeben werden. Dem Fachmann sind dazu hinreichend viele Techniken bekannt.

Vorzugsweise wird eine Schliess- und Offenstellung des Ventils anhand des Drehmomentanstiegs am Motor ermittelt. Alternativ oder zusätzlich kann ein Durchfluss im Rohr gemessen werden, um auf die Offen- und Schliessstellung zu schliessen. Anhand der ermittelten Offen- und Schliessstellung kann zum Beispiel über eine Anzahl dazwischenliegender Drehungen der Spindel auf die Position der Spindel geschlossen werden.

Erfindungsgemäss ist der Motor mechanisch von der Antriebswelle entkoppelbar. Damit wird erreicht, dass der Antrieb bei Bedarf - zum Beispiel bei einem Stromausfall - manuell bedient werden kann. Zum Beispiel kann die mechanische Entkopplung dadurch erreicht werden, dass die Antriebswelle aus dem Adapter hinaus geführt wird, so dass zwischen Antriebswelle und Adapter keine Drehmomentübertragung mehr erreichbar ist.

Erfindungsgemäss wirkt der Motor in eingekoppeltem Zustand über ein Zahnradgetriebe mit der Antriebswelle zusammen und wobei in entkoppeltem Zustand mindestens zwei Zahnräder, welche im eingekoppelten Zustand in Eingriff stehen, nicht in Eingriff stehen. Damit wird eine besonders einfache mechanische Entkopplung erreicht. Eine Umsetzung dieser Entkopplung kann zum Beispiel erreicht werden, indem ein Zahnrad axial verfahren wird. Besonders bevorzugt erfolgt die Entkoppelung hinsichtlich des Getriebes nahe an der Antriebswelle, so dass bei einer manuellen Betätigung möglichst kein Reib- oder Getriebewiderstand überwunden werden muss. Besonders bevorzugt erfolgt die Entkoppelung durch eine axiale Bewegung des Zahnrads, welches die Antriebswelle antreibt oder der Antriebswelle selbst. Letzteres kann dann von Vorteil sein, wenn hinreichend Spielraum durch den Adapter geschaffen wird, so dass neben der Spindelbewegung auch die Entkoppelungsbewegung aufgenommen werden kann.

Besonders bevorzugt erfolgt die Axialverschiebung einer ein Zahnrad umfassende Achse mittels einer Kurvensteuerung. Insbesondere kann die Achse eine helikale Nut aufweisen, in welcher ein Stift ragt und so eine Drehung der Achse in eine axiale Bewegung der Achse umwandelt. In diesem Fall ist das Zahnrad an der Achse frei rotierbar gelagert. Dem Fachmann sind aber auch andere mögliche Lösungen bekannt.

In nicht erfindungsgemäßen Varianten kann die Entkopplung auch zum Beispiel mittels einer anderen, dem Fachmann bekannten Kupplung, zum Beispiel mit einer Zahnkupplung erreicht werden.

Ein Verfahren zur Montage eines Antriebs mit einer Antriebswelle an einem Spindelventil umfassend eine Spindel, das nicht Gegenstand der vorliegenden Erfindung ist, umfasst die folgenden Schritte:
1. Montage eines Adapters an der Spindel des Spindelventils, so dass der Adapter verdrehgesichert an der Spindel gehalten ist;
2. Montage der Antriebswelle des Antriebs am Adapter, so dass die Antriebswelle verdrehgesichert am Adapter gehalten ist.

Der Antrieb wird danach bevorzugt in Relation zum Spindelventil verdrehgesichert, so dass ein Drehimpuls vom Antrieb auf die Spindel und nicht auf den Antrieb selbst übertragen wird. Dazu wird im zweiten Schritt die bereits an einem Gehäuseteil befestigte Hülse so über den Adapter geführt, dass einerseits die Antriebswelle in die Antriebswellenöffnung des Adapters zu liegen kommt und anderseits das erste Ende der Hülse über den Oberteil des Spindelventils gestülpt wird. Anschliessend wird die Hülse mittels der Befestigungsmittel an dem Spindelventiloberteil befestigt.

Wird mit dem Antrieb ein bestehendes Spindelventil nachgerüstet, so kann die Montage gemäss den nachfolgenden Schritten erfolgen:
1. Schliessen des Ventils von Hand.
2. Demontieren des Handrads (Entfernen des Sprengrings und Abziehen des Handrads)
3. Entkoppeln des Antriebs.
4. Einrasten des Adapters auf der Spindel.
5. Ausrichten der Antriebswelle und Einführen derselben in den Adapter.
6. Montage der Befestigungsvorrichtung des Antriebs am Ventil, insbesondere am Ventiloberteil.
7. Einkoppeln des Antriebs.

Vorzugsweise umfasst der Antrieb eine Stellanzeige (siehe oben). Bei der Montage wird die Stellanzeige bevorzugt vor dem Einrasten des Adapters (also vor obigem Schritt 4) auf den Adapter aufgeschoben. Danach wird der Adapter auf die Spindel eingerastet. Um die Stellanzeige zu nullen wird die Stellanzeige bei geschlossenem Ventil bis zum Anschlag in Richtung des Ventilgehäuses geschoben.

Die mit dem Antrieb betreibbaren Ventile sind vorzugsweise Spindelventile mit steigender Spindel, wobei sowohl Schrägsitzventile als auch Geradsitzventile zum Einsatz kommen können. Dies wird insbesondere durch die Befestigung des Antriebs am Oberteilkörper des Ventils erreicht. Die Ventile können zum Beispiel Grössen im Zollbereich von ½" bis hin zu 4" aufweisen. Dem Fachmann ist aber klar, dass die Ventile auch grösser oder kleiner dimensioniert sein können und dass nicht zwingend Ventile mit Zollmassen verwendet werden müssen.

Vorzugsweise verfügen die Stellantriebe über keine eigene elektronische Intelligenz, d.h. die Steuerung erfolgt vorzugsweise über ein zentrales Steuergerät, über welches ein oder mehrere Antriebe gesteuert werden können. Dies hat den Vorteil, dass das Steuergerät gut zugänglich positioniert werden kann.

Eine solche Anordnung umfasst vorzugsweise mindestens einen obig beschriebenen Antrieb und eine zum Antrieb separate Steuerbox mit einem Controller zum Ansteuern des mindestens einen Antriebs. Typischerweise werden mit einer solchen Steuerbox über die ansteuerbaren Antriebe mehrere Spindelventile angesteuert. Damit kann dezentral zu den Spindelventilen die Steuerung derselben organisiert werden. Dies ist insbesondere dann von Vorteil, wenn die Spindelventile weit auseinander liegen oder wenn diese schlecht zugänglich sind. Weiter können damit in einfacher Weise aufgrund von Informationen anderer Ventile ein Ventil angesteuert werden, z.B. in einer wenn-dann-Verknüpfung oder ähnliche.

Vorzugsweise umfasst die Anordnung weiter mindestens einen Sensor zum Generieren von Daten, insbesondere einen Wassersensor oder ein Niveausensor zum Ermitteln eines Wasserstandes respektive einen Min- und einen Max-Niveausensor zur Regulierung eines minimalen respektive maximalen Wasserstandes. Dem Fachmann sind weitere Sensoren und deren Anwendungen bekannt, welche in diesem Zusammenhang eingesetzt werden können. Die Steuerbox ist dabei mit dem Sensor verbunden, so dass der Antrieb anhand der vom Sensor generierten Daten steuerbar ist. Die Steuerbox stellt damit einen Knotenpunkt zwischen Sensoren und den Ventilen dar.

Zum Beispiel kann bei einer Detektion einer Leckage der Wassersensor ein entsprechendes Signal "Leckage detektiert" an die Steuerbox senden. Die Steuerbox verarbeitet diese Information über den Controller und sendet die Anweisung "Ventil schliessen" an das entsprechende Ventil.

Als weiteres Beispiel kann bei einer Detektion eines Füllstands, z.B. eines Brunnens, Boilers oder eines Schwimmbads, durch den Füllstandsensor ein Signal "voll" an die Steuerbox gesendet werden, welche diese Information über den Controller verarbeitet und die Anweisung "Ventil schliessen" an das entsprechende Ventil sendet.

In weiteren Anwendungen kann Strömungskontrollschalter als Sensor vorgesehen sein, welcher kontrolliert, ob durch ein, gemäss Antrieb und Steuerbox als offen geltendes Ventil, auch wirklich Wasser fliesst. Dem Fachmann sind auch weitere Sensoren bekannt, welche in diesem Zusammenhang eingesetzt werden können. So könnte ein Sensor auch einfach die Aussentemperatur messen um bei Temperaturen unter dem Gefrierpunkt automatisch über die Steuerbox Rohrleitungen zu entleeren welche gefrieren könnten.

In weiteren Varianten umfasst die Anordnung, insbesondere die Steuerbox Schnittstellen, über welche die Ventile in eine Gebäudeautomation, wie zum Beispiel über ein Netzwerkprotokoll wie BACnet, KNX, LON, Modbus oder andere dem Fachmann bekannte Protokolle für die Gebäudeautomation.

Die Steuerbox umfasst vorzugsweise zudem Mittel zum drahtlosen übermitteln von Informationen, vorzugsweise an periphere mobile Geräte wie ein Mobiltelefon, ein Tablet oder dergleichen. Das periphere Gerät kann aber auch ein Computer oder ein Netzwerk eines Gebäudeautomationssystems sein. Weiter können die Steuerbox und der Antrieb auch derart ausgebildet sein, dass eine Steuerung über eine drahtlose Kommunikationseinrichtung wie Bluetooth, Funk etc. erfolgt. Anderseits kann die Kommunikation mit dem Antrieb auch über Powerline oder andere dem Fachmann bekannte Verfahren erfolgen.

Diese Anordnung findet vorzugsweise Verwendung in einem Trinkwasserverteilsystem. Anderseits kann die Anordnung aber auch in anderen Systemen, wie zum Beispiel in der Lebensmittelindustrie oder dergleichen eingesetzt werden.

Alternativ kann der Antrieb selbst mit einer Steuerung versehen sein, so dass am Antrieb selbst gewisse oder sogar alle Einstellungen vorgenommen werden können. Damit kann prinzipiell auch auf ein zentrales Steuergerät verzichtet werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Schnittdarstellung entlang einer Antriebswellenachse durch eine Ausführungsform eines Antriebs und eines Ventils in Schliessstellung;
- Fig. 2: eine Darstellung gemäss Figur 1 in Offenstellung;
- Fig. 3: eine schematische Schnittdarstellung entlang einer zur Antriebswellenachse parallelen Betätigungsachse der Entkopplungsvorrichtung bei deaktivierter Entkopplung;
- Fig. 4: eine Darstellung gemäss Figur 3 bei aktivierter Entkopplung;
- Fig. 5: eine schematische Detaildarstellung des montierten Adapters; und
- Fig. 6: ein Diagramm zur Illustration einer Anordnung umfassend einen Antrieb, eine Steuerbox und periphere Geräte.

Grundsätzlich sind in den Figuren gleiche Teile mit gleichen Bezugszeichen versehen.

### Wege zur Ausführung der Erfindung

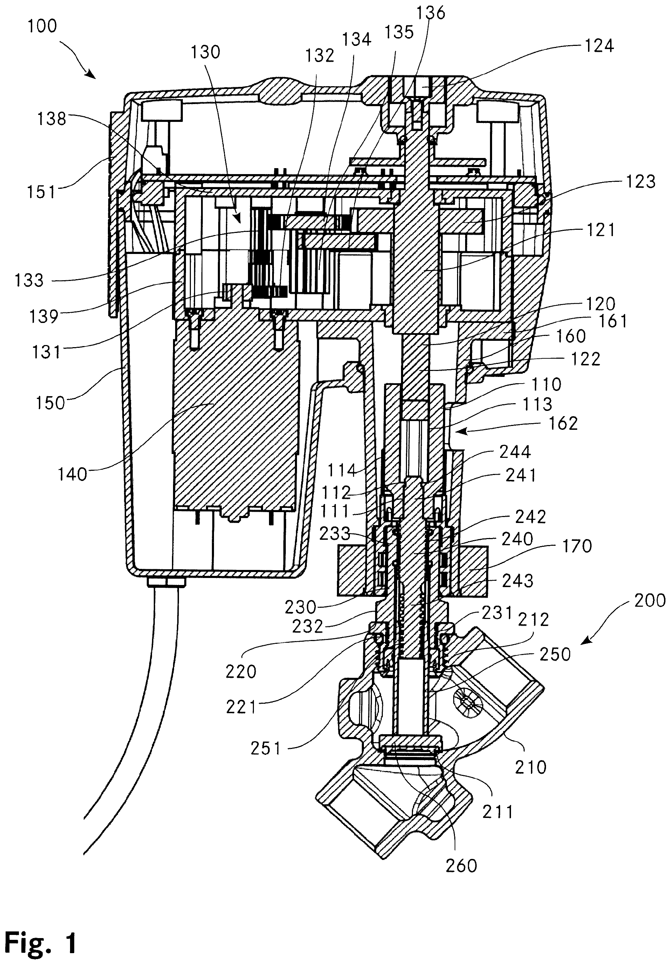

Die Figur 1 zeigt eine schematische Schnittdarstellung entlang einer Antriebswellenachse durch eine Ausführungsform eines Antriebs 100 und eines Ventils 200 in Schliessstellung.

Beim Spindelventil 200 handelt es sich um ein handelsübliches Schrägsitzspindelventil 200 umfassend ein Ventilgehäuse 210 mit einem Ein- und Auslass für das zuführende Fluid (typischerweise Wasser). Das Ventilgehäuse 210 umfasst weiter einen Ventilsitz 211, auf welchen ein Ventilteller 260 dichtend aufgesetzt werden kann. Das Spindelventil 200 umfasst weiter ein Innengewinde, in welches ein Gewindeübergang 220 mit einem dem Innengewinde des Ventilgehäuses 210 entsprechenden Aussengewinde eingeschraubt werden kann. Der Gewindeübergang 220 ist mittels eines O-Rings 221 gegenüber dem Ventilgehäuse 210 abgedichtet. Der Gewindeübergang 220 wiederum weist ein Innengewinde für einen Oberteilkörper 230 des Spindelventils 200 auf.

Der Oberteilkörper 230 weist dazu einen Aussengewindebereich 231 auf, welches im Innengewinde des Gewindeübergangs 220 aufgenommen ist. An den Aussengewindebereich 231 schliesst sich ein Flansch 232 an, welcher als Anschlag für den Gewindeübergang 220 dient. Schliesslich weist der Oberteilkörper 230 einen Schaft 233 auf, welcher sich wiederum an den Flansch 232 anschliesst und in montiertem Zustand des Spindelventils 200 ausserhalb des Ventilgehäuses 210 liegt. Der Schaft 233 des Oberteilkörpers 230 umfasst ein Innengewinde für die Spindel 240. Die Spindel 240 weist einen mittleren Bereich 242 mit einem Aussengewinde für den Oberteilkörper 230 auf. Ein in montiertem Zustand ausserhalb des Oberteilkörpers liegender Vierkant-Spindelschaft 241 ist handelsüblich mit einem Handrad versehen (nicht dargestellt) und weist zu Sicherung des Handrads eine Sprengringnut 244 auf. Vorliegend ist aber anstelle des Handrads ein Antrieb 100 auf dem Vierkant-Spindelschaft 241 montiert (siehe unten). Am zum Vierkant-Spindelschaft 241 gegenüberliegenden Ende umfasst die Spindel 240 ein Aussengewinde für eine Führungsstange 250 mit Innengewinde. An der Führungsstange 250 ist schliesslich der Ventilteller 260 befestigt.

Zur Verbindung der Spindel 240 mit der Antriebswelle 120 umfasst der Antrieb 100 einen Adapter 110. Dieser ist im Wesentlichen hülsenförmig ausgebildet und weist einen ersten Bereich mit einem Innenvierkant 111 für die Spindel 240 sowie einen zweiten Bereich mit einem Innenvierkant 113 für die Antriebswelle 120 auf. Vorliegend weist der Antrieb einen grösseren Innenvierkant 113 für die Antriebswelle 120 auf als der Innenvierkant 111 für die Spindel 240. Dem Fachmann ist klar, dass die beiden Innenvierkant 111, 113 auch identisch oder anderweitig dimensioniert sein können. Dies hängt nicht zuletzt von der Dimensionierung des Antriebs 100 relativ zum Spindelventil 200 zusammen. Schliesslich können für eine bestimmte Antriebsgrösse auch unterschiedliche Adapter 110 vorgesehen sein, welche sich in der Dimensionierung des Innenvierkants 111 für die Spindel 240 unterscheiden. Die Aussenform des Adapters 110 weist vorliegend im Wesentlichen die Form zweier koaxialer gerader Kreiszylinder mit unterschiedlichem Durchmesser auf, wobei der Abschnitt mit dem Innenvierkant 111 für die Spindel 240 den kleineren Durchmesser aufweist. Im Übergang zwischen den beiden Innenvierkant 111, 113 weist der Innenvierkant 111 einen radial nach innen gerichteter Rastring 112 auf, welcher derart dimensioniert ist, dass die Spindel 240 mit der Sprengringnut 244 (welche auch zur Fixierung eines Handrads mit einem Sprengring verwendet werden kann) im Rastring 112 eingerastet werden kann. Damit kann die Spindel 240 sowohl durch die Vierkantform verdrehgesichert als auch axial im Adapter 110 fixiert werden.

Der Antrieb 100 umfasst ein im Wesentlichen L-förmiges, zweiteiliges Gehäuse mit einem unteren Gehäuseteil 150 und einem oberen Gehäuseteil 151, in welchem der Motor 140 und das Getriebe 130 mit der Antriebswelle 120 untergebracht sind. Zwischen dem unteren Gehäuseteil 150 und dem oberen Gehäuseteil 151 ist ein Lightguide 152 angeordnet. Dabei handelt es sich um ein lichtdurchlässiges Element, welches von Dioden angestrahlt wird. Damit kann ein Betriebszustand des Ventilantriebs signalisiert werden. Zum Beispiel kann der Lightguide 152 grün für Betriebsbereit, rot für Störung oder blinkend für den aktuellen Betrieb leuchten.

Der Motor 140 sowie das Getriebe 130 mit der Antriebswelle 120 und die Spindel 240 weisen in montiertem Zustand jeweils parallele Drehachsen auf. Das Getriebe 130 umfasst ein zweiteiliges Getriebegehäuse mit einem oberen Gehäuseteil 138 und einem unteren Gehäuseteil 139 bestehend aus zwei quaderförmigen und einseitig offenen Halbschalen, welche zusammengebaut eine geschlossene Quaderform bilden. In diesem Getriebegehäuse 138, 139 sind die Zahnräder 131 - 137 so gelagert, dass jeweils ein Ende einer ein Zahnrad umfassenden Welle im oberen Gehäuseteil 138 und das jeweils andere Ende im unteren Gehäuseteil 139 aufgenommen ist. Das letzte Zahnrad 137 des Getriebes 130 greift in das Zahnrad 123 der Antriebswelle 120 ein. Der Antrieb umfasst damit 8 Zahnräder.

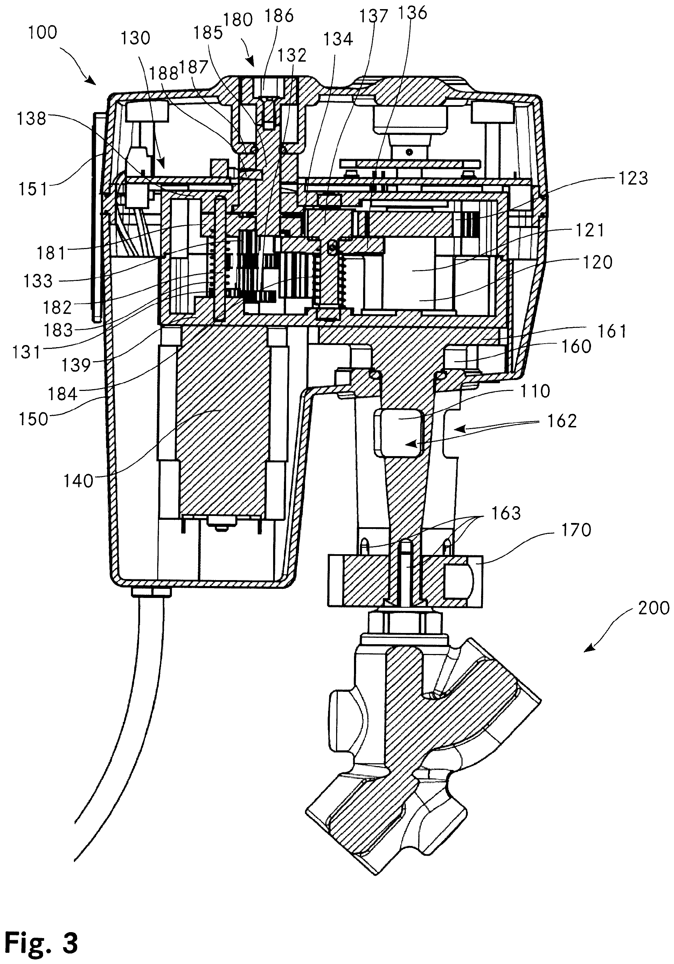

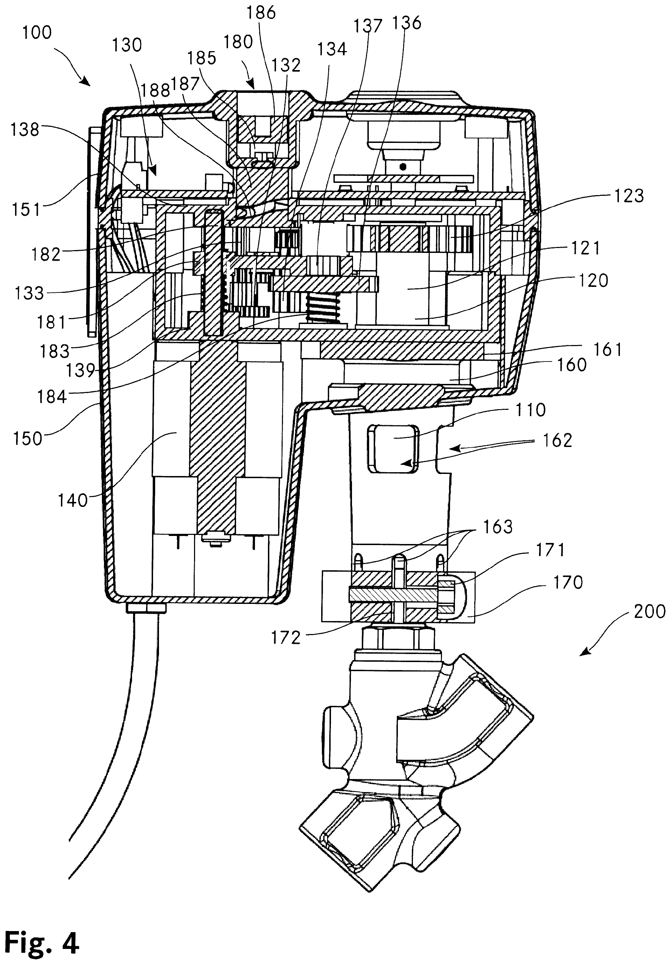

Der Motor 140 weist ein erstes Zahnrad 131 auf, welches das Zahnrad 132 auf einer zur Motorwelle parallelen ersten Welle antreibt. Letztere weist ein Zahnrad 133 auf, welches wiederum ein Zahnrad 134 einer zweiten parallelen Welle antreibt. Letztere weist wiederum ein Zahnrad 135 auf, welches wiederum ein Zahnrad 136 einer dritten parallelen Welle antreibt. Diese dritte Welle weist schliesslich ein Zahnrad 137 (in Figur 3 und 4 ersichtlich) auf, welches bei deaktivierter Entkoppelungsvorrichtung 180 (siehe unten) mit dem Zahnrad 123 der Antriebswelle 120 zusammenwirkt. Die Zahnräder 132, 133 sowie 134, 135 und 136, 137 sind paarweise drehfest miteinander verbunden und weisen jeweils eine gemeinsame Achse auf, welche im Getriebegehäuse 138, 139 gelagert ist. Das jeweils erste Zahnrad 132, 134, 136 der Wellen weist einen grösseren Durchmesser auf, als das jeweils zweite Zahnrad 133, 135, 137, so dass es sich beim vorliegenden Getriebe 130 um ein Reduktionsgetriebe handelt. Die Reduktion oder Untersetzung des Getriebes liegt ungefähr zwischen 1:200 und 1:800, vorzugsweise ungefähr bei 1:500, d.h. dass aus 500 Umdrehungen der Motorwelle eine Umdrehung der Antriebswelle 120 respektive der Spindel 240 folgt.

Die Antriebswelle 120 ist im Getriebegehäuse 138, 139 gelagert und umfasst nacheinander im Wesentlichen drei Abschnitte. Ein erster Abschnitt umfasst einen Aussenvierkant 122, welcher längsverschieblich aber drehfest im Innenvierkant 113 des Adapters 110 geführt ist. An diesen schliesst sich der Antriebswellenschaft 121 an, welcher das Zahnrad 123 trägt und welcher im Getriebegehäuse 138, 139 gelagert ist. Das Getriebegehäuse 138, 139 wie auch das Gehäuse 150, 151 selbst weisen zwei gegenüberliegende Öffnungen zur rotierbaren Lagerung des Antriebswellenschaft 121 auf, damit der Aussenvierkant 122 wie auch der nachfolgend beschriebene Innensechskant 124 von aussen zugänglich sind. Der Innensechskant 124 der Antriebswelle 120 ist an einem dem Aussenvierkant 122 gegenüberliegenden Ende der Antriebswelle 120 angeordnet. Dieser Innensechskant 124 ist in montiertem Zustand von aussen zugänglich, so dass bei entkoppeltem Getriebe 130 mittels eines entsprechenden Sechskantschlüssels über die Antriebswelle 120 und den Adapter 110 das Ventil 200 betätigt werden kann. Diese Betätigung dient vorliegend als Notfallbetätigungsmöglichkeit. Die Entkoppelung des Getriebes 130 wird unten beschrieben.

Um das Getriebe 130 bezüglich dem Ventil 200 fixieren zu können, ist ein als Hülse 160 ausgebildeter Hohlkörper vorgesehen, welche zwischen dem Getriebegehäuse 138, 139 und dem Oberteilkörper 230 angeordnet ist. Die Hülse 160 weist am ersten Ende einen Flansch 161 auf, über welchen die Hülse am Getriebegehäuse 138, 139 festgeschraubt ist. Dem Flansch 161 gegenüberliegend am zweiten Ende weist die Hülse 160 sechs umfangseitig regelmässig beabstandete axiale Schlitze auf. Mit diesem zweiten Ende ist die Hülse über den Oberteilkörperschaft 233 des Oberteilkörpers 230 bis hin zum Flansch 232 des Oberteilkörpers 230 gestülpt. Um das zweite Ende der Hülse ist eine ringförmige Klemme 170 angeordnet, welche einen Innendurchmesser entsprechend dem Aussendurchmesser des zweiten Endes der Hülse 160 aufweist. Diese Klemme 170 ist in Figur 4 gut ersichtlich. Die Klemme 170 weist einen radialen Klemmschlitz 172 auf, welcher eine tangentiale Bohrung aufweist, welche den Klemmschlitz 172 überbrückt. Auf der einen Seite weist die Bohrung ein Innengewinde für eine Klemmschraube 171, auf der anderen Seite weist sie einen Sitz für den Kopf der Klemmschraube auf (siehe auch Figur 4). Wird nun die Klemmschraube 171 angezogen, so werden die Schlitze 163 der Hülse 160 durch die radiale Verpressung verkleinert, so dass die Hülse am Oberteilkörperschaft 233 des Oberteilkörpers 230 festgeklemmt ist. Diese Montage ist reversibel, so kann einfach durch lösen der Klemmschraube 171 die Hülse 160 und damit der gesamte Antrieb wieder vom Ventil 200 gelöst werden.

Die Klemmschraube 171 weist vorliegend einen anderen Innensechskant auf als der Innensechskant der Antriebswelle 124 für den Handbetrieb. Damit kann nicht derselbe Schlüssel für beide Verwendungen eingesetzt werden. So kann verhindert werden, dass statt die Antriebswelle entkoppelt versehentlich der Antrieb 100 vom Oberteilkörper 230 gelöst wird.

Die Hülse 160 weist im Bereich zwischen dem Flansch 161 und den Schlitzen 163 drei umfangseitig angeordnete Sichtöffnung 162 auf, durch welche eine Ventilstellung des Ventils 200 abgelesen werden kann. Die Sichtöffnung 162 ist ungefähr in einer Höhe des Adapters 110 angeordnet. Dieser weist eine Stellanzeige 114 in Form eines Zylindermantels auf, welcher derart über den Adapter 110 geführt ist, dass die Stellanzeige 114 in Schliessstellung des Ventils 200 in der Sichtöffnung 162 nicht ersichtlich ist und in Offenstellung des Ventils 200 in der Sichtöffnung 162 ersichtlich ist. Die Stellanzeige 114 ist kraftschlüssig am Adapter 110 gehalten. Die Hülse 160 weist einen Anschlag für die Stellanzeige 114 auf, welche die Stellanzeige 114 in der Schliessstellung kontaktiert und justiert. Bei der Montage kann damit die Stellanzeige 114 auf den Adapter 110 geführt werden. Nachdem der Adapter 110 auf der Spindel 240 eingerastet ist kann der Adapter 110 in Richtung des Ventils 200 nach unten gefahren werden, um die Stellanzeige zu nullen.

Die Figur 1 zeigt den Antrieb 100 und das Ventil 200 in der Schliessstellung, so dass der Ventilteller 260 auf dem Ventilsitz 211 aufliegt und die Stellanzeige 114 durch die Sichtöffnung 162 nicht ersichtlich ist. Weiter ist in diesem Zustand die Spindel 240 und damit der Adapter 110 unten, d.h. der Adapter 110 ist in seiner dem Ventil 200 nächstmöglichen Position. Damit ist der Antriebswellenvierkant 122 nur zu einem kleinen Teil im Adapter 110 aufgenommen, d.h. der Zwischenraum zwischen Spindel 240 und Antriebswelle 120 ist in diesem Zustand am grössten.

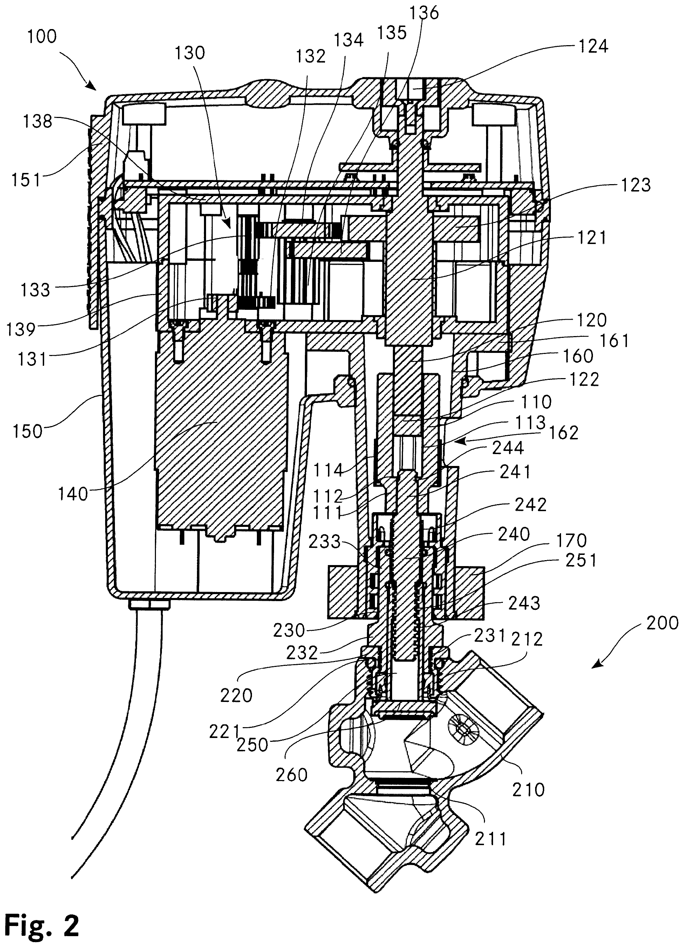

Wird nun das Ventil 200 geöffnet, so windet sich die Spindel 240 nach oben und schiebt den Adapter 110 über den Antriebswellenvierkant 122, so dass sich der Abstand zwischen Spindel 240 und Antriebswelle 120 innerhalb des Adapters 110 verringert. Der Ventilteller 260 liegt nun nicht mehr auf dem Ventilsitz 211 auf. Die Stellanzeige 114 wird nun durch die Sichtöffnungen 162 ersichtlich und zeigt an, dass das Ventil offen ist. Dieser Zustand ist in der Figur 2 gut ersichtlich.

Die Figur 3 zeigt eine schematische Schnittdarstellung entlang einer zur Antriebswellenachse parallelen Betätigungsachse der Entkopplungsvorrichtung 180 bei deaktivierter Entkopplung.

Die Entkopplungsvorrichtung 180 umfasst innerhalb des Getriebegehäuses 138, 139 eine Brücke 181, welche an einem ersten Ende eine Öffnung aufweist, in welcher ein Führungsstift 182 angeordnet ist. Die Brücke 181 ist damit entlang des Führungsstifts 182 verfahrbar. Der Führungsstift 182 ist parallel zu den Zahnradachsen angeordnet und im Getriebegehäuse 138, 139 fixiert. Zwischen der Brücke 181 und dem Getriebegehäuse 138, 139 weist der Führungsstift 182 eine Spiraldruckfeder 183 auf. Mit dem anderen Ende liegt die Brücke 181 bei nicht entkoppeltem Zustand knapp nicht auf dem Zahnrad 136 auf.

Die beiden Zahnräder 136 und 137 sind miteinander verbunden und auf der gemeinsamen Achse ebenfalls verschiebbar angeordnet. Zwischen dem grösseren Zahnrad 136 und dem Getriebegehäuse 138, 139 ist ebenfalls eine Spiraldruckfeder 184 angeordnet.

Wird nun gemäss Figur 4 die Brücke 181 nach unten, entgegen der beiden Spiraldruckfedern 183, 184, gepresst, so drückt das zweite Ende der Brücke 181 das Zahnrad 136 entgegen der Feder 184 nach unten, so dass das Zahnrad 137 nicht mehr in Eingriff mit dem Zahnrad 123 der Antriebswelle 120 steht. Damit ist der Antrieb 100 entkoppelt und das Ventil 200 kann mittels Sechskantschlüssel über den Innensechskant , 124 der Antriebswelle betätigt werden.

Das nach unten Pressen der Brücke 181 erfolgt über einen Bolzen 185, welcher im Gehäuse 150, 151 und im Getriebegehäuse 138, 139 rotierbar und längsverschieblich gelagert ist. Dieser Bolzen 185 weist einen von aussen zugänglichen Innensechskant 186 auf, welcher identisch wie der Innensechskant 124 ist, so dass nur ein einziger Schlüssel für die Bedienung bereitgestellt werden muss. Der Bolzen 185 ist in einer fix mit dem Getriebegehäuse 138, 139 verbundenen Kurvenhülse 187 geführt. Der Bolzen 185 weist einen radial abstehenden Stift 188 auf, welcher in einer helikalen Nut der Kurvenhülse 187 geführt ist. Die helikale Nut verläuft vorliegend ungefähr über einen Winkel von 270° um die Kurvenhülse 187 herum und definiert den Hubweg des Bolzens 185, welcher mindestens eine Zahnraddicke des Zahnrads 137 entspricht. Wird nun über den Innensechskant 186 der Bolzen 185 rotiert, so bewegt sich der Bolzen in axialer Richtung entsprechend der helikalen Nut. Die Kurvenhülse 187 ist nun derart am Getriebegehäuse 138, 139 positioniert und der Stift 188 ist derart am Bolzen 185 angeordnet, dass bei deaktivierter Entkoppelungsvorrichtung 180 das dem Innensechskant 186 gegenüberliegende Ende des Bolzens 185 auf der Brücke 181 aufliegt. Dieser Zustand ist in Figur 3 ersichtlich. Wird nun der Bolzen 185 um einen Winkel von 270° rotiert, so bewegt sich der Bolzen 185 nach unten in Richtung der Brücke 181 und treibt diese entgegen der Federn 183, 184 nach unten. Damit wird auch das Zahnrad 136 zusammen mit dem Zahnrad 137 nach unten verfahren, so dass das Zahnrad 137 nun nicht mehr in Eingriff mit dem Zahnrad 123 der Antriebswelle 120 steht. Damit ist der Antrieb 100 entkoppelt. Dieser Zustand ist in Figur 4 ersichtlich.

Es kann von Vorteil sein, wenn die Feder 183 etwas stärker oder länger ausgebildet ist, als die Feder 184, so dass bei nicht aktivierter Entkoppelungsvorrichtung die Brücke 181 zum Zahnrad 136 beabstandet ist, womit ein Reibverlust respektive ein Abrieb der Brücke 181 vermieden werden kann. Prinzipiell wäre es denkbar, dass der Bolzen 185 direkt auf das Zahnrad 186 wirkt, so dass auf die Brücke 181, den Führungsstift 182 und die Feder 183 verzichtet werden kann.

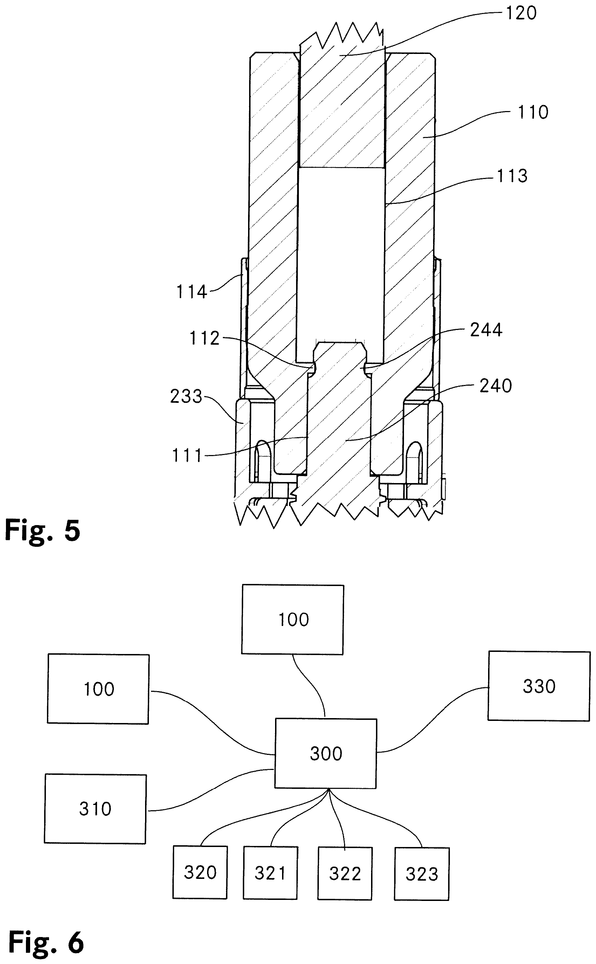

Die Figur 5 zeigt eine schematische Detaildarstellung des montierten Adapters 110. Dabei ist gut zu erkennen, dass der Innenvierkant 111 für die Spindel 240 eine einstückig mit dem Adapter 110 ausgebildeten Rastring 112 aufweist, welcher gleichzeitig den Übergang vom Innenvierkant 111 für die Spindel 240 zum Innenvierkant 113 für die Antriebswelle 120 darstellt. Der Innenvierkant 111 weist vorliegend eine kleinere Querschnittsfläche auf als der Innenvierkant 113 - sowohl in Bezug auf die Öffnung des Innenvierkants als auch auf den Zylinderabschnitt selbst, welcher den jeweiligen Innenvierkant 111, 113 umfasst. Dem Fachmann ist aber klar, dass dies nicht unbedingt sein muss - in einer weiteren Ausführungsform (nicht dargestellt) sind die beiden Querschnittsflächen identisch. Weiter könnte die Querschnittsfläche des Innenvierkants 113 auch kleiner sein als diejenige des Innenvierkants 111.

Im vorliegenden Fall weist der Zylinderabschnitt mit dem Innenvierkant 111 einen kleineren Aussendurchmesser auf als der Zylinderabschnitt mit dem Innenvierkant 113. Dies ist von besonderem Vorteil, da die Flanke zwischen den beiden Zylinderabschnitten als Anschlag für die Hülse der Stellanzeige 114 dienen kann. Somit kann gewährleistet werden, dass die Stellanzeige 114 nur beschränkt nach oben, in Richtung der Antriebswelle rutschen kann.

Die Figur 6 zeigt ein Diagramm zur Illustration einer Anordnung umfassend zwei Antriebe 100, eine Steuerbox 300 und periphere Geräte. Im vorliegenden Beispiel weist die Anordnung eine zentral angeordnete Steuerbox 300 auf. Diese umfasst vorliegend einen Controller zum Verarbeiten von ein- und ausgehenden Daten, einen Bluetooth-Sender zum Senden von Daten an periphere Geräte wie Smartphones und dergleichen, eine RTC-Clock zum Sicherstellen von Zeitgesteuerten Schaltungen, einen RS485-Schnittstelle zum Anschliessen an eine Gebäudeautomation 310 (z.B. mit einem Netzwerkprotokoll gemäss BACnet, KNX, LON oder Modbus), sowie ein Netzgerät zur Stromversorgung der Steuerbox sowie denjenigen peripheren Geräten, welche über keine eigene Energieversorgung verfügen, wie zum Beispiel einem Antriebe oder dergleichen. Der Controller der Steuerbox ist weiter mit einem Wassersensor 320, einem Niveausensor 321, einem Strömungskontrollschalter 322 sowie einem Temperatursensor 323 verbunden. Diese Sensoren 320 - 323 können vorliegend Anfragen vom Controller bearbeiten und Daten über den Status oder Messdaten des Sensors an den Controller senden. Der Controller wiederum kann die Daten verarbeiten und/oder an ein peripheres Gerät weiterleiten. Zudem kann der Controller aufgrund der erhaltenen Daten - sowohl von einem peripheren Gerät wie zum Beispiel einem Smartphone als auch von einem Sensor oder von der Gebäudeautomation - einen oder mehrere Antriebe 100 ansteuern.

Zusammenfassend ist festzustellen, dass erfindungsgemäss ein Antrieb für Spindelventile geschaffen wird, welcher besonders einfach und dennoch robust aufgebaut ist und womit schnell und unkompliziert bestehende handbetriebene Spindelventile nachgerüstet werden können.

## Patentansprüche

1. Antrieb (100) für eine steigende Spindel (240) eines Spindelventils (200), in einem Trinkwasserverteilsystem, umfassend einen Motor (140) und eine über den Motor (140) antreibbare Antriebswelle (120) sowie eine Drehmomentübertragungseinrichtung zum Übertragen eines Drehmoments von der Antriebswelle (120) auf die Spindel (240) des Spindelventils (200), wobei die Drehmomentübertragungseinrichtung einen mit der Antriebswelle (120) zusammenwirkenden Adapter (110) aufweist, wobei mit dem Adapter (110) eine Relativbewegung zwischen der Antriebswelle (120) und der Spindel (240) des Spindelventils (200) in Richtung einer Antriebswellenachse aufnehmbar ist und wobei mit dem Adapter (110) ein Drehmoment von der Antriebswelle (120) an die Spindel (240) des Spindelventils (200) übertragbar ist, wobei der Motor (140) durch axiales Verfahren eines Zahnrades mechanisch von der Antriebswelle (120) entkoppelbar ist, wobei der Motor (140) in eingekoppeltem Zustand über ein Zahnradgetriebe (130, 123) mit der Antriebswelle (120) zusammenwirkt und wobei in entkoppeltem Zustand mindestens zwei Zahnräder (137, 123), welche im eingekoppelten Zustand in Eingriff stehen, nicht in Eingriff stehen, **dadurch gekennzeichnet, dass** der Adapter (110) längsverschieblich in Richtung der Antriebswellenachse
a. an der Antriebswelle (120); oder
b. an der Spindel (240); oder
c. sowohl an der der Spindel (240) als auch an der Antriebswelle (120) geführt ist.

2. Antrieb (100) nach Anspruch 1, **dadurch gekennzeichnet, dass** der Adapter (110) zur Aufnahme der Antriebswelle (120) hülsenförmig ausgebildet ist.

3. Antrieb (100) nach Anspruch 1 oder 2, **dadurch gekennzeichnet, dass** der Adapter (110) mittels Formschluss drehfest an die Antriebswelle (120) ankoppelbar ist.

4. Antrieb (100) nach einem der Ansprüche 1 bis 3, **dadurch gekennzeichnet, dass** die Antriebswelle (120) einen polygonalen Querschnitt, vorzugsweise einen quadratischen Querschnitt aufweist und dass der Adapter (110) eine Antriebswellenöffnung mit entsprechendem Querschnitt aufweist, so dass die Antriebswelle (120) in die Antriebswellenöffnung einführbar und darin längsverschieblich geführt und verdrehgesichert gehalten ist.

5. Antrieb (100) nach Anspruch 4, **dadurch gekennzeichnet, dass** der Adapter (110) eine zur Antriebswellenöffnung koaxiale Spindelöffnung (111) aufweist, in welche die Spindel (240) einführbar ist.

6. Antrieb (100) nach Anspruch 5, **dadurch gekennzeichnet, dass** die Spindelöffnung (111) des Adapters (110) eine Ausbuchtung (112), insbesondere eine umlaufende Ausbuchtung (112) aufweist, welche in einer Ringnut (244) einer Spindel (240) derart aufnehmbar ist, dass der Adapter (110) an einer Spindel (240) durch Verrastung axial fixierbar ist.

7. Antrieb (100) nach einem der Ansprüche 1 bis 6, **dadurch gekennzeichnet, dass** er ein Gehäuse (138, 139) umfasst, welches Befestigungsmittel (160) zur Fixierung an einem Spindelventiloberteil umfasst.

8. Antrieb (100) nach Anspruch 7, **dadurch gekennzeichnet, dass** der Antrieb (100) über die Befestigungsmittel (160) kraftschlüssig mit dem Ventiloberteil (230) verbindbar ist.

9. Antrieb (100) nach Anspruch 8, **dadurch gekennzeichnet, dass** die Befestigungsmittel (160) einen Hohlkörper (160) zur Befestigung am Spindelventil (200) umfassen, wobei in dem Hohlkörper (160) der Adapter (110) anordenbar ist und wobei ein axial geschlitzter distaler Bereich des Hohlkörpers (160) Druckmittel (170) umfasst, um den axial geschlitzten Bereich mit einer durch die Druckmittel (170) erzeugten radialen Kraft derart zu verpressen, dass der Hohlkörper (160) über den distalen Bereich am Spindelventil (200) befestigbar ist.

10. Antrieb (100) nach Anspruch 9, **dadurch gekennzeichnet, dass** die Druckmittel (170) eine den Schlitz (163) überbrückende Schraubverbindung umfassen.

11. Antrieb (100) nach Anspruch 9 oder 10, **dadurch gekennzeichnet, dass** der Hohlkörper (160) seitlich eine Öffnung (162) umfasst, durch welche hindurch eine Axialposition des Adapters (110) erfassbar ist.

12. Spindelventil (200) umfassend einen Antrieb (100) nach einem der Ansprüche 1 bis 11.

13. Anordnung umfassend mindestens einen Antrieb (100) nach einem der Ansprüche 1 bis 11 und eine zum Antrieb separate Steuerbox (300) mit einem Controller zum Ansteuern des mindestens einen Antriebs (100).

14. Anordnung nach Anspruch 13, weiter umfassend mindestens einen Sensor zum Generieren von Daten, insbesondere einen Wassersensor oder einen Niveausensor, wobei die Steuerbox (300) mit dem Sensor verbunden ist und wobei der Antrieb anhand der vom Sensor generierten Daten steuerbar ist.

15. Verwendung einer Anordnung nach einem der Ansprüche 13 oder 14 in einem Trinkwasserverteilsystem.

## Claims

1. Drive (100) for a rising spindle (240) of a spindle valve (200), in a drinking water distributing system, comprising a motor (140) and a drive shaft (120), which is able to be driven via the motor (140), and also a torque transmission device for transmitting a torque from the drive shaft (120) to the spindle (240) of the spindle valve (200), wherein the torque transmission device has an adaptor (110) which interacts with the drive shaft (120), wherein a relative movement between the drive shaft (120) and the spindle (240) of the spindle valve (200) in the direction of a drive shaft axis is able to be accommodated by the adaptor (110), and wherein a torque is able to be transmitted from the drive shaft (120) to the spindle (240) of the spindle valve (200) by the adaptor (110), wherein the motor (140) is able to be mechanically decoupled from the drive shaft (120) by axial movement of a toothed wheel, wherein, in the coupled state, the motor (140) interacts with the drive shaft (120) via a toothed-wheel gearing (130, 123), and wherein, in the decoupled state, at least two toothed wheels (137, 123), which are in engagement in the coupled state, are not in engagement, **characterized in that** the adaptor (110) is guided, so as to be longitudinally displaceable in the direction of the drive shaft axis,
a. on the drive shaft (120); or
b. on the spindle (240); or
c. both on the spindle (240) and on the drive shaft (120) .

2. Drive (100) according to Claim 1, **characterized in that** the adaptor (110) is formed in a sleeve-like manner to receive the drive shaft (120).

3. Drive (100) according to Claim 1 or 2, **characterized in that** the adaptor (110) is able to be coupled to the drive shaft (120) in a rotationally conjoint manner by means of a form fit.

4. Drive (100) according to one of Claims 1 to 3, **characterized in that** the drive shaft (120) has a polygonal cross section, preferably a square cross section, and **in that** the adaptor (110) has a drive shaft opening with a corresponding cross section, such that the drive shaft (120) is able to be inserted into the drive shaft opening and, therein, is guided so as to be longitudinally displaceable and held so as to be rotationally secured.

5. Drive (100) according to Claim 4, **characterized in that** the adaptor (110) has a spindle opening (111) which is coaxial with the drive shaft opening and into which the spindle (240) is able to be inserted.

6. Drive (100) according to Claim 5, **characterized in that** the spindle opening (111) of the adaptor (110) has a bulge (112), in particular an encircling bulge (112), which is able to be received in an annular groove (244) of a spindle (240) such that the adaptor (110) is able to be axially fixed to a spindle (240) by locking.

7. Drive (100) according to one of Claims 1 to 6, **characterized in that** it comprises a housing (138, 139) which comprises fastening means (160) for fixing to a spindle valve upper part.

8. Drive (100) according to Claim 7, **characterized in that** the drive (100) is able to be connected to the valve upper part (230) in a force-fitting manner via the fastening means (160).

9. Drive (100) according to Claim 8, **characterized in that** the fastening means (160) comprise a hollow body (160) for the fastening to the spindle valve (200), wherein the adaptor (110) is able to be arranged in the hollow body (160), and wherein an axially slotted distal region of the hollow body (160) comprises pressure means (170) for the purpose of compressing the axially slotted region by way of a radial force, generated by the pressure means (170), such that the hollow body (160) is able to be fastened to the spindle valve (200) via the distal region.

10. Drive (100) according to Claim 9, **characterized in that** the pressure means (170) comprises a screw connection which bridges the slot (163).

11. Drive (100) according to Claim 9 or 10, **characterized in that** the hollow body (160) laterally comprises an opening (162) through which an axial position of the adaptor (110) is able to be ascertained.

12. Spindle valve (200) comprising a drive (100) according to one of Claims 1 to 11.

13. Arrangement comprising at least one drive (100) according to one of Claims 1 to 11 and a control box (300) which is separate from the drive and which has a controller for activating the at least one drive (100) .

14. Arrangement according to Claim 13, also comprising at least one sensor for generating data, in particular a water sensor or a level sensor, wherein the control box (300) is connected to the sensor, and wherein the drive is able to be controlled on the basis of the data generated by the sensor.

15. Use of an arrangement according to either of Claims 13 and 14 in a drinking water distributing system.

## Revendications

1. Entraînement (100) destiné à une broche montante (240) d'une vanne à broche (200) dans un système de distribution d'eau potable, l'entraînement comprenant un moteur (140) et un arbre d'entraînement (120) qui peut être entraîné par le moteur (140) et un dispositif de transmission de couple destiné à transmettre un couple de l'arbre d'entraînement (120) à la broche (240) de la vanne à broche (200), le dispositif de transmission de couple comportant un adaptateur (110) qui coopère avec l'arbre d'entraînement (120), l'adaptateur (110) permettant de recevoir un mouvement relatif entre l'arbre d'entraînement (120) et la broche (240) de la vanne à broche (200) en direction d'un axe d'arbre d'entraînement et l'adaptateur (110) permettant de transmettre un couple de l'arbre d'entraînement (120) à la broche (240) de la vanne à broche (200), le moteur (140) pouvant être désaccouplé mécaniquement de l'arbre d'entraînement (120) par un déplacement axial d'une roue dentée, le moteur (140) coopérant à l'état désaccouplé avec l'arbre d'entraînement (120) par le biais d'une transmission par roue dentée (130, 123) et au moins deux roues dentées (137, 123), qui sont en engagement à l'état accouplé, ne sont pas en engagement à l'état désaccouplé, **caractérisé en ce que** l'adaptateur (110) guidé suivant un coulissement longitudinal dans la direction de l'axe de l'arbre d'entraînement
a. au niveau de l'arbre d'entraînement (120) ; ou
b. au niveau de la broche (240) ; ou
c. à la fois au niveau de la broche (240) et au niveau de l'arbre d'entraînement (120).

2. Entraînement (100) selon la revendication 1, **caractérisé en ce que** l'adaptateur (110) est conçu en forme de manchon de manière à recevoir l'arbre d'entraînement (120) .

3. Entraînement (100) selon la revendication 1 ou 2, **caractérisé en ce que** l'adaptateur (110) peut être accouplé solidairement en rotation à l'arbre d'entraînement (120) par complémentarité de formes.

4. Entraînement (100) selon l'une des revendications 1 à 3, **caractérisé en ce que** l'arbre d'entraînement (120) a une section transversale polygonale, de préférence une section transversale carrée, et **en ce que** l'adaptateur (110) comporte une ouverture d'arbre d'entraînement de section correspondante, de sorte que l'arbre d'entraînement (120) peut être inséré dans l'ouverture de l'arbre d'entraînement et guidé dans celle-ci suivant un coulissement longitudinal et maintenu sans pouvoir tourner.

5. Entraînement (100) selon la revendication 4, **caractérisé en ce que** l'adaptateur (110) a une ouverture de broche (111) qui est coaxiale à l'ouverture d'arbre d'entraînement et dans laquelle la broche (240) peut être insérée.

6. Entraînement (100) selon la revendication 5, **caractérisé en ce que** l'ouverture de broche (111) de l'adaptateur (110) comporte un renflement (112), en particulier un renflement périphérique (112) qui peut être reçu dans une gorge annulaire (244) d'une broche (240) de sorte que l'adaptateur (110) puisse être fixé axialement à une broche (240) par encliquetage.

7. Entraînement (100) selon l'une des revendications 1 à 6, **caractérisé en ce qu'**il comporte un boîtier (138, 139) qui comprend des moyens de fixation (160) destinés à la fixation à une partie supérieure de la vanne à broche.

8. Entraînement (100) selon la revendication 7, **caractérisé en ce que** l'entraînement (100) peut être relié par force à la partie supérieure de vanne (230) par le biais des moyens de fixation (160).

9. Entraînement (100) selon la revendication 8, **caractérisé en ce que** les moyens de fixation (160) comprennent un corps creux (160) destiné à être fixé à la vanne à broche (200), l'adaptateur (110) pouvant être disposé dans le corps creux (160) et une région distale (160) fendue axialement du corps creux comprenant des moyens de pression (170) pour comprimer la région fendue axialement avec une force radiale générée par les moyens de pression (170) de telle sorte que le corps creux (160) puisse être fixé à la vanne à broche (200) sur la région distale.

10. Entraînement (100) selon la revendication 9, **caractérisé en ce que** les moyens de pression (170) comprennent une liaison à vis couvrant la fente (163).

11. Entraînement (100) selon la revendication 9 ou 10, **caractérisé en ce que** le corps creux (160) comporte latéralement une ouverture (162) à travers laquelle une position axiale de l'adaptateur (110) peut être détectée.

12. Vanne à broche (200) comprenant un entraînement (100) selon l'une des revendications 1 à 11.

13. Ensemble comprenant au moins un entraînement (100) selon l'une des revendications 1 à 11 et une boîte de commande (300) séparée de l'entraînement et comportant un dispositif de commande destiné à commander l'au moins un entraînement (100).

14. Ensemble selon la revendication 13, comprenant en outre au moins un capteur destiné à générer des données, en particulier un capteur d'eau ou un capteur de niveau, la boîte de commande (300) étant reliée au capteur et l'entraînement pouvant être commandé sur la base des données générées par le capteur.

15. Utilisation d'un ensemble selon l'une des revendications 13 ou 14 dans un système de distribution d'eau potable.
